# EUROPÄISCHE PATENTSCHRIFT

(11) **EP 2 327 145 B1**
(45) Veröffentlichungstag und Bekanntmachung des Hinweises auf die Patenterteilung: **29.04.2015**
(21) Anmeldenummer: 09778458.1
(22) Anmeldetag: 10.09.2009
(51) Int. Cl.: H02M 7/48, H02J 1/00

(54) **TRENNSCHALTUNG FÜR WECHSELRICHTER**
SEPARATING CIRCUIT FOR INVERTERS
DISPOSITIF SECTIONNEUR POUR ONDULEUR

(30) Priorität: 25.09.2008 DE 102008048841
(43) Veröffentlichungstag der Anmeldung: 01.06.2011
(73) Patentinhaber: Fraunhofer-Gesellschaft zur Förderung der angewandten Forschung, 80686 München (DE)
(72) Erfinder: BURGER, Bruno, 79110 Freiburg (DE); SCHMIDT, Heribert, 79117 Freiburg (DE)
(74) Vertreter: Zimmermann, Tankred Klaus
(86) Internationale Anmeldenummer: PCT/EP2009/006577
(87) Internationale Veröffentlichungsnummer: WO 2010/034413

(56) Entgegenhaltungen:
- DE-A1- 10 041 340
- DE-A1- 10 221 592
- DE-A1-102006 023 563
- DE-B3-102004 030 912
- JP-A- 9 046 926
- JP-A- 2000 233 876
- JP-A- 2001 238 465

## Beschreibung

Ausführungsbeispiele der Erfindung beziehen sich auf die Umformung elektrischer Gleichspannung in eine elektrische Wechselspannung unter Verwendung eines Wechselrichters, insbesondere auf eine Trennschaltung für Wechselrichter zur Trennung desselben von einer Gleichspannungsenergiequelle, wie beispielsweise einer Photovoltaikanlage, Brennstoffzelle, Batterie oder Ähnlichem.

Die JP 2001-238465 A beschreibt einen Wechselrichter, der über eine Verbindungsschaltung mit einem Solargenerator verbunden ist. Die Verbindungsschaltung umfasst Blitzschutzelemente und einen Unterbrechungsschalter, der eine Trennung von Solargenerator und Wechselrichter ermöglicht, wenn kein Solarbetrieb erwünscht ist.

Ausgehend von einem Gleichspannungspotential einer Gleichspannungsquelle ist es erforderlich, zur Einspeisung der Energie in ein existierendes Wechselspannungsnetz, einen Wechselstrom zu erzeugen, der in Bezug auf Polarität bzw. Phase und Amplitude an den Potentialverlauf der Wechselspannung, beispielsweise einer 50 oder 60 Hz sinusförmig ausgebildeten Netzspannung, angeglichen ist. Wechselrichter werden beispielsweise im Bereich der Photovoltaik eingesetzt und sind vorzugsweise transformatorlos ausgeführt, um hohe Wirkungsgrade zu erreichen. Ein Nachteil der transformatorlosen Schaltungen besteht jedoch darin, dass das Potential des Netzes durch den transformatorlosen Wechselrichter auf die Gleichspannungsseite und damit auf den Solargenerator durchgeschleift wird. Der Solargenerator ist dadurch nicht mehr potentialfrei und kann auch nicht geerdet werden, wie es z.B. für Dünnschichtmodule wünschenswert ist.

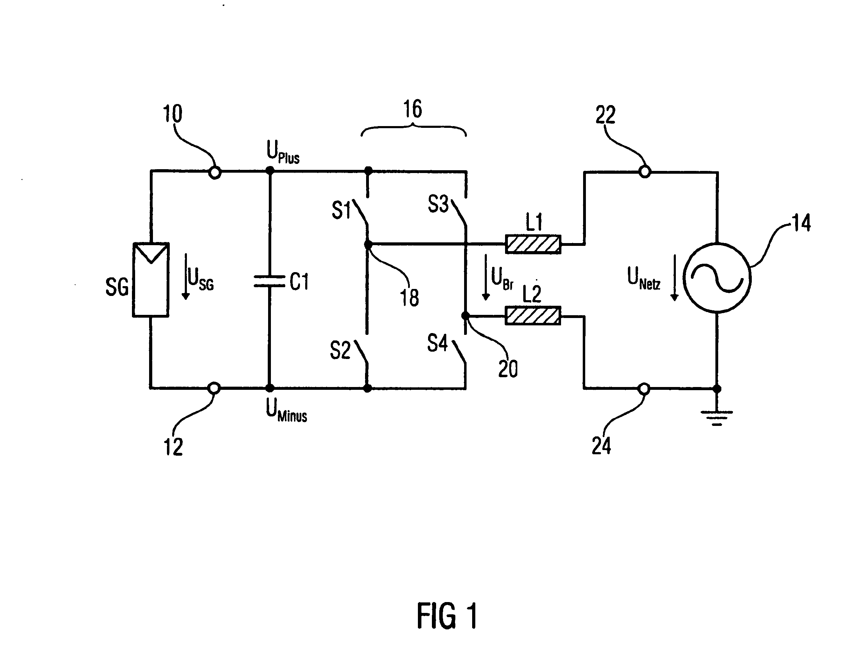

Fig. 1 zeigt einen einphasigen Wechselrichter in einer H4-Brückenschaltung, wie er beispielsweise in der Einleitung der DE 102 21 592 A1 beschrieben wird, auf die im Hinblick auf nähere Einzelheiten der Funktionsweise verwiesen wird. Die in Fig. 1 gezeigte Schaltung umfasst als Gleichspannungsquelle einen Solargenerator SG mit den Gleichspannungsanschlüssen 10, 12. Zur Umwandlung der Solargeneratorgleichspannung U_{SG} in einen für die Einspeisung in das Netz 14 geeigneten Wechselstrom umfasst der in Fig. 1 gezeigte einphasige, transformatorlose Wechselrichter einen Pufferkondensator C₁, der parallel zu einer Vollbrücke 16 bestehend aus 4 Schaltereinheiten S1 bis S4 geschaltet ist. Die einzelnen Schaltereinheiten S1 bis S4 können als Hochfrequenzschalter ausgebildet sein, die beispielsweise Schaltvorgänge mit Frequenzen von bis zu einigen 100 kHz realisieren können. Solche Schalter können als MOS-Feldeffekt-Transistoren oder als IGBT (Insulated Gate Bipolar Transistor) ausgebildet sein.

Ein Brückenabgriff erfolgt mittig in den Parallelästen der Brückenschaltung 16 an den Verbindungsknoten 18 und 20 zwischen den Schaltereinheiten S1 und S2 bzw. zwischen den Schaltereinheiten S3 und S4. Die Verbindungsknoten 18 und 20 sind über die Drosselinduktivitäten L₁ bzw. L₂ mit den Wechselspannungsanschlüssen 22 und 24 verbunden, die ihrerseits mit dem Netz 14 verbunden sind. Zwischen den Verbindungsknoten 18 und 20 liegt die Brückenspannung U_{Br} an.

Zur Umwandlung der Solargeneratorspannung U_{SG} in den zur Netzeinspeisung erforderlichen Wechselstrom werden die Schaltereinheiten S1 bis S4 mit einem vorbestimmten, hochfrequenten Taktmuster in aufeinander abgestimmter Weise geöffnet und geschlossen, um zeitdiskret voneinander unterscheidbare Brückenspannungen zu erzeugen, deren Mittelwert auf die extern angelegte Wechselspannung U_{Netz} abgestimmt ist. Während des Betriebs des Wechselrichters nimmt die Brückenspannung U_{Br} im Falle geschlossener Schalter S1 und S4 die Spannung Uₚₗᵤₛ an, und im Falle geschlossener Schaltereinheiten S2 und S3 die Spannung U_{Minus}.

Die anhand der Fig. 1 beschriebenen, einphasigen Wechselrichter in H4-Brückenschaltung werden beispielsweise bipolar getaktet, wobei die zwei Ausgangsdrosseln L₁ und L₂ vorgesehen sind, um Potentialsprünge am Solargenerator SG zu verhindern. Solche Potentialsprünge sind unerwünscht, da der Solargenerator SG eine große Kapazität gegen Erde bzw. Masse aufweist und bei einem Potentialsprung ein großer kapazitiver Umladestrom fließen würde. Durch die über die Diagonale erfolgende bipolare Taktung und die Verwendung von symmetrischen Ausgangsdrosseln wird die halbe Amplitude der Netzspannung U_{Netz} der Solargeneratorspannung U_{SG} überlagert. Da es sich hierbei um eine eingeprägte Spannung handelt, floatet der Solargenerator SG mit sinusförmigem Potential gegenüber Erde.

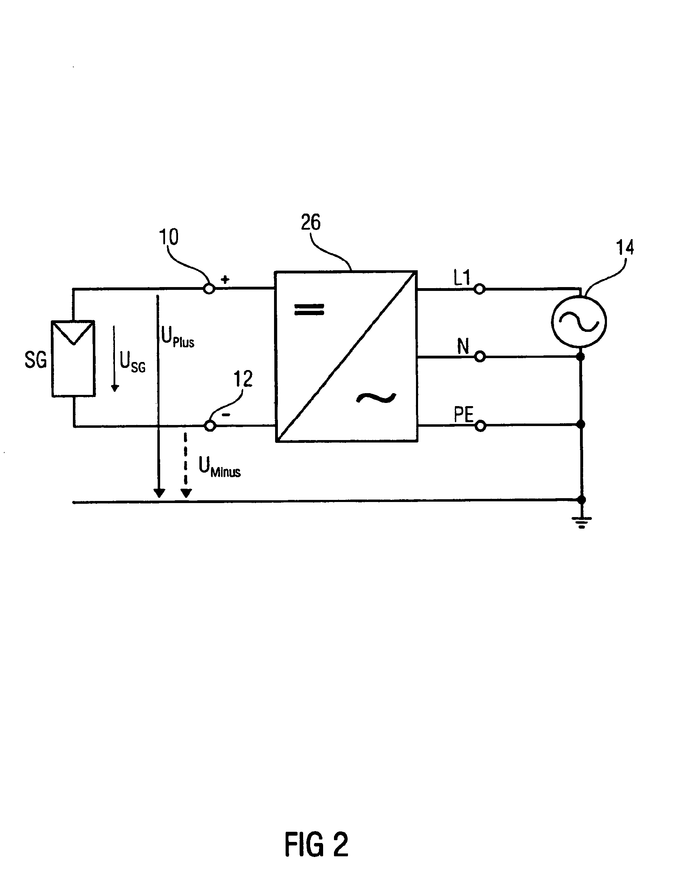

Fig. 2 verdeutlicht die DC-Spannungen des Solargenerators gegen Erde, wobei in Fig. 2 der Wechselrichter vereinfacht dargestellt ist und mit dem Bezugszeichen 26 versehen ist.

Der Nachteil der bipolaren Taktung, wie sie oben anhand der Fig. 1 beschrieben wurde, besteht darin, dass der erreichbare Wirkungsgrad nur gering ist. Höhere Wirkungsgrade ließen sich zwar mit einer unipolaren Taktung oder mit dem sogenannten Einphasenchopping erreichen, da hier unipolare Spannungen am Ausgang der Brücke 16 erzeugt werden können und somit der Stromripple in der Drossel gegenüber der bipolaren Taktung erheblich reduziert wird, jedoch weisen solche Taktungsverfahren Nachteile auf, die den Einsatz bei der Umwandlung einer Gleichspannung, beispielsweise einer Gleichspannung, die durch einen Solargenerator bereitgestellt wird, nicht ermöglichen. Bei einer unipolaren Taktung oder beim Einphasenchopping der Brücke würde der Solargenerator SG taktfrequente Potentialsprünge gegen Erde aufweisen, was große kapazitive Ausgangsströme zur Folge hätte, so dass diese gerade beschriebenen, grundsätzlich vorteilhaften Taktungsarten nicht eingesetzt werden können.

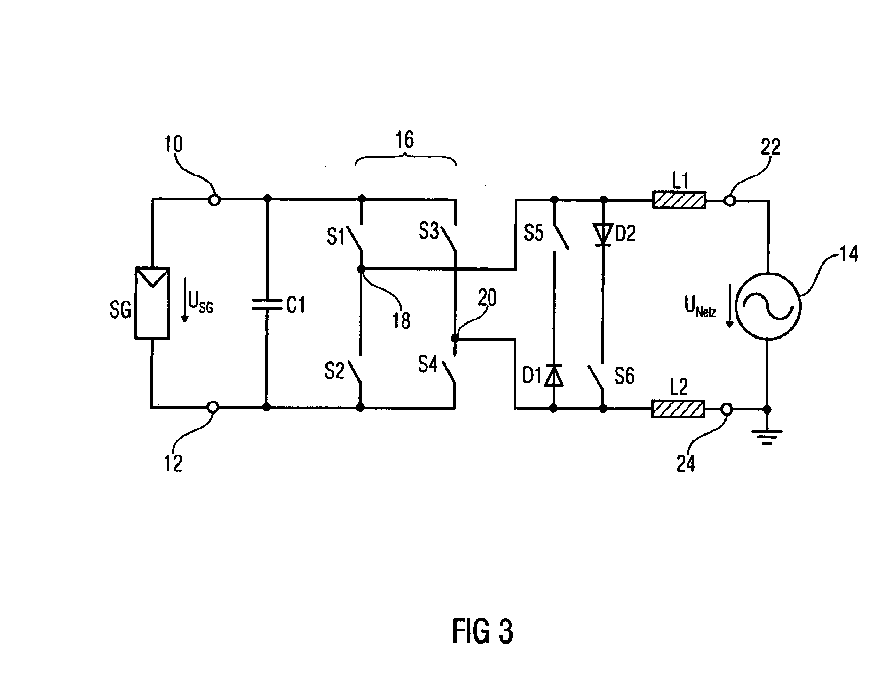

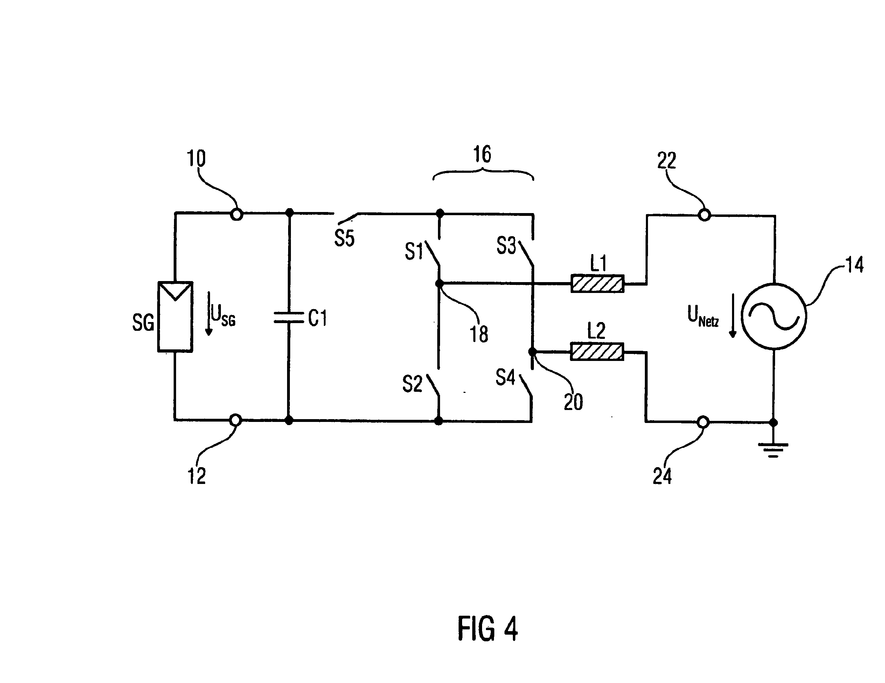

Die gerade beschriebenen Probleme im Hinblick auf den Wirkungsgrad einphasiger Wechselrichter in H4-Brückenschaltung lassen sich durch die anhand der Fig. 3 und 4 beschriebenen Schaltungen lösen, nämlich durch die in Fig. 3 gezeigte Heric^{®}-Schaltung gemäß der DE 102 21 592 A1 und durch die in Fig. 4 gezeigte H5-Schaltung gemäß der DE 10 2004 030 912 B3. Nachfolgend sei nur der generelle Aufbau dieser zwei bekannten Schaltungen gemäß den genannten Veröffentlichungen erläutert, und hinsichtlich einer genaueren Erläuterung des Funktionsprinzips dieser Schaltungen wird auf die genannten Veröffentlichungen verwiesen.

Die in Fig. 3 gezeigte Schaltung umfasst zusätzlich zu der in Fig. 1 gezeigten Schaltung zwei parallele Verbindungspfade zwischen den Brückenabgriffen 18 und 20, in denen jeweils ein Schalter S5 bzw. S6 sowie eine in Reihe geschaltete Gleichrichterdiode D₁ bzw. D₂ vorgesehen sind, wobei die Gleichrichterdioden in den einzelnen Verbindungspfaden zueinander in entgegengesetzter Durchlassrichtung geschaltet sind. Bei der Schaltung gemäß Fig. 4 ist zusätzlich zu der in Fig. 1 beschriebenen Schaltung zwischen dem Gleichstromanschluss 10 und der Brücke 16 der Schalter S5 vorgesehen. Die anhand der Fig. 3 und 4 beschriebenen Schaltungen ermöglichen durch ihren Aufbau das Schalten eines sogenannten Freilaufpfades.

Bei der Schaltung gemäß Fig. 3 fließt der positive Freilaufstrom über den Transistor bzw. Schalter S5 und die Diode D₁, und der negative Freilaufstrom läuft über den Transistor bzw. Schalter S6 und die Diode D₂. Während des Freilaufs wird der Solargenerator durch die Schalter bzw. Transistoren S1 bis S4 abgeschaltet, so dass dieser keine Potentialsprünge erfährt.

Ähnlich verhält es sich bei der in Fig. 4 gezeigten H5-Schaltung. Hier fließt der positive Freilaufstrom über den Transistor S1 und die Freilaufdiode des Transistors S3, und der negative Freilaufstrom läuft über den Transistor S3 und die Freilaufdiode des Transistors S1. Während des Freilaufs wird der Solargenerator SG hier durch die Schalter bzw. Transistoren S2, S4 und S5 abgetrennt.

Durch die anhand der Fig. 3 und 4 beschriebenen Schaltungen lassen sich Wirkungsgrade erreichen, die gegenüber den mit der anhand der Fig. 1 gezeigten Schaltung erreichbaren Wirkungsgrade um 1 bis 2 % höher liegen.

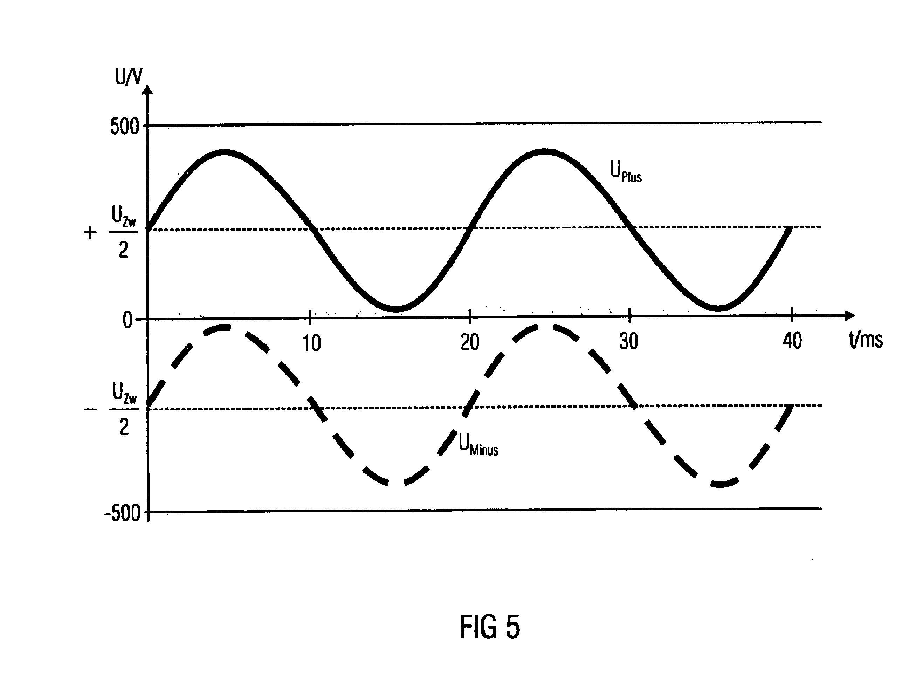

Fig. 5 zeigt die Spannung des Solargenerators gegen Erde bei den anhand der Fig. 1, 3 und 4 beschriebenen einphasigen, transformatorlosen Wechselrichtern. Wie zu erkennen ist, ist bei dem Potential des Solargenerators gegen Erde stets die halbe Netzspannungsamplitude überlagert. In allen Fällen floatet der Solargenerator somit mit sinusförmigem Potential gegen Erde und er kann nicht geerdet werden, da sich hierdurch ein direkter Pfad zwischen dem Solargenerator SG und dem Netz 14 einstellen würde.

Dies mag für viele Ausgestaltungen von Solargeneratoren vertretbar sein, jedoch existieren Solargeneratoren, bei denen eine Erdung erwünscht ist, insbesondere wenn solche Solargeneratoren Dünnschichtmodule oder rückseitenkontaktierte Solarzellen verwenden. Die Erdung ist bei Dünnschichtmodulen erwünscht, um eine vorzeitige Alterung der Dünnschichtmodule zu vermeiden. Ferner kann eine Erdung des Solargenerators aufgrund nationaler Normen in einigen Ländern vorgeschrieben sein.

Ausgehend von diesem Stand der Technik liegt der vorliegenden Erfindung die Aufgabe zugrunde, einen Ansatz zu liefern, der es ermöglicht, einen Wechselrichter der oben beschriebenen Art von der Gleichspannungsquelle zu trennen, so dass diese, sofern erwünscht, geerdet werden kann.

Diese Aufgabe wird durch eine Trennschaltung gemäß Anspruch 1, ein System gemäß Anspruch 6, eine Wechselrichterschaltung gemäß Anspruch 11 und ein Verfahren gemäß Anspruch 14 gelöst.

Ausführungsbeispiele der vorliegenden Erfindung schaffen eine Trennschaltung für einen Wechselrichter, wobei der Wechselrichter einen Energiespeicher aufweist, der während einer Freilaufphase von einem Netz getrennt ist, wobei die Trennschaltung folgende Merkmale umfasst:
einen Eingang;
einen Ausgang, der konfiguriert ist, um mit dem Wechselrichter verbunden zu werden;
ein Energiespeicherelement C₀₁, das mit dem Eingang verbunden ist und wirksam ist, um von dem Eingang empfangene Energie zu speichern; und
ein Schaltelement, das zwischen das Energiespeicherelement C₀₁ und den Ausgang geschaltet ist, wobei das Schaltelement wirksam ist, um während der Freilaufphase des Wechselrichters das Energiespeicherelement C₀₁ mit dem Ausgang zu verbinden, und um außerhalb der Freilaufphase des Wechselrichters das Energiespeicherelement C₀₁ von dem Ausgang zu trennen.

Weitere Ausführungsbeispiele der Erfindung schaffen ein System, mit
einem Solargenerator, der mit einem Bezugspotential verbunden ist;
einem Wechselrichter, der ausgebildet ist, um eine von dem Solargenerator bereitgestellte Gleichspannung in eine Wechselspannung umzuwandeln und an einen Ausgang des Wechselrichters bereitzustellen, wobei der Wechselrichter ferner ausgebildet ist, um während einer Freilaufphase einen Energiespeicher C₁ des Wechselrichters von dem Ausgang des Wechselrichters zu trennen; und
einer Trennschaltung nach Ausführungsbeispielen der Erfindung.

Ferner schaffen Ausführungsbeispiele der Erfindung eine Wechselrichterschaltung zum Umwandeln einer empfangenen Gleichspannung in eine Wechselspannung, mit
einem Eingang;
einem Ausgang;
einem Energiespeicher C₁;
einem Schaltnetzwerk, das zwischen den Energiespeicher C₁ und den Ausgang geschaltet ist und wirksam ist, um während einer Freilaufphase den Energiespeicher C₁ von dem Ausgang zu trennen, und um außerhalb der Freilaufphase den Energiespeicher C₁ mit dem Ausgang zu verbinden; und
einer Trennschaltung nach Ausführungsbeispielen der Erfindung, die zwischen den Eingang und den Energiespeicher C₁ geschaltet ist.

Wiederum weitere Ausführungsbeispiele der Erfindung schaffen ein Verfahren zum Umwandeln einer durch einen Solargenerator, der mit einem Bezugspotential verbunden ist, bereitgestellten Gleichspannung in eine Wechselspannung, mit folgenden Schritten:
außerhalb einer Freilaufphase eines Wechselrichters, wenn ein Energiespeicher des Wechselrichters mit einem Ausgang des Wechselrichters verbunden ist, Trennen des Solargenerators von dem Wechselrichter und Zwischenspeichern der von dem Solargenerator bereitgestellten Energie; und
während der Freilaufphase des Wechselrichters, während der der Energiespeicher des Wechselrichters von dem Ausgang des Wechselrichters getrennt ist, Aufladen des Energiespeichers des Wechselrichters.

Gemäß Ausführungsbeispielen der Erfindung wird der Zwischenkreiskondensator C₁ des Wechselrichters (siehe Fig. 1 bis 4) durch einen geerdeten Solargenerator während der Freilaufphase des Wechselrichters geladen, da der Zwischenkreiskondensator C₁ während dieser Zeit von dem Netzpotential getrennt ist. Außerhalb der Freilaufphasen, wenn der Zwischenkreiskondensator über die Brückentransistoren bzw. Brückenschalter mit dem Netz verbunden ist, wird der geerdete Solargenerator abgetrennt, wodurch ein Kurzschluss verhindert wird. Diese Abtrennung erfolgt gemäß Ausführungsbeispielen der Erfindung mit zwei zusätzlichen Transistoren oder Schaltern. Damit der Solargenerator während der Abtrennung noch Energie liefern kann, ist ein weiterer Eingangskondensator C₀₁ als Energiespeicher vorgesehen.

Weitere Ausführungsformen der Erfindung sind in den Unteransprüchen definiert.

Ausführungsbeispiele der vorliegenden Erfindung werden nachfolgend anhand der beiliegenden Zeichnungen näher erläutert. Es zeigen:
- Fig. 1: ein Schaltungsdiagramm eines einphasigen Wechselrichters in H4-Brückenschaltung;
- Fig. 2: eine Verdeutlichung der Definition der DC-Spannungen des Solargenerators gegen Erde;
- Fig. 3: ein Prinzipschaltbild eines herkömmlichen Wechselrichters;
- Fig. 4: ein Prinzipschaltbild eines Wechselrichters in H5-Schaltung;
- Fig. 5: die DC-Spannungsverläufe des Solargenerators gegen Erde bei Verwendung der einphasigen transformatorlosen Wechselrichter gemäß Fig. 1, 3 und 4;
- Fig. 6: das Prinzipschaltbild eines Ausführungsbeispiels der Erfindung bestehend aus einem Energiespeicher, einer Trenneinrichtung und einem Wechselrichter, wobei in Fig. 6(a) der Minuspol des Solargenerators geerdet ist, und wobei in Fig. 6(b) der Pluspol des Solargenerators geerdet ist;
- Fig. 7(a): ein Ausführungsbeispiel der Trennschaltung mit einem Kondensator als Pufferspeicher und zwei elektronischen Schaltern;
- Fig. 7(b): die in Fig. 7(a) gezeigte Trennschaltung mit einer weiteren Diode zur Unterdrückung eines Rückstroms in den Kondensator und mit einem Solargenerator, dessen Minuspol geerdet ist;
- Fig. 7(c): die in Fig. 7(a) gezeigte Trennschaltung mit einer weiteren Diode zur Unterdrückung eines Rückstroms in den Kondensator und mit einem Solargenerator, dessen Pluspol geerdet ist;
- Fig. 8: die DC-Spannungsverläufe des Solargenerators gegen Erde bei Verwendung der Trenneinrichtung gemäß Ausführungsbeispielen der Erfindung, wobei Fig. 8(a) die DC-Spannungsverläufe für einen Solargenerator zeigt, dessen Minuspol geerdet ist, und wobei Fig. 8(b) die DC-Spannungsverläufe für einen Solargenerator zeigt, dessen Pluspol geerdet ist;
- Fig. 9(a): ein weiteres Ausführungsbeispiel der Erfindung mit einem Kondensator als Pufferspeicher und zwei elektronischen Schaltern, zwei Drosselspulen und einer Freilaufdiode;
- Fig. 9(b): das in Fig. 9(a) gezeigte Ausführungsbeispiel mit einer weiteren Diode zur Unterdrückung eines Rückstroms in den Kondensator und mit einem Solargenerator, dessen Minuspol geerdet ist;
- Fig. 9(c): das in Fig. 9(a) gezeigte Ausführungsbeispiel mit einer weiteren Diode zur Unterdrückung eines Rückstroms in den Kondensator und mit einem Solargenerator, dessen Pluspol geerdet ist;
- Fig. 10: die Verwendung der Trenneinrichtungen gemäß Fig. 7(a), Fig. 7(b) und Fig. 7(c) mit einer herkömmlichen Wechselrichterschaltung gemäß Fig. 3 (Fig. 10(a), Fig. 10(b) und Fig. 10(c));
- Fig. 11: die Verwendung der Trenneinrichtungen gemäß Fig. 7(a), Fig. 7(b) und Fig. 7(c) mit einer herkömmlichen Wechselrichterschaltung gemäß Fig. 4 (Fig. 11(a), Fig. 11(b) und Fig. 11(c)):
- Fig. 12: die Verwendung der Trenneinrichtungen gemäß Fig. 9(a), Fig. 9(b) und Fig. 9(c) mit einer herkömmlichen Wechselrichterschaltung gemäß Fig. 3 (Fig. 12(a), Fig. 12(b) und Fig. 12(c)); und
- Fig. 13: die Verwendung der Trenneinrichtungen gemäß Fig. 9(a), Fig. 9(b) und Fig. 9(c) mit einer herkömmlichen Wechselrichterschaltung gemäß Fig. 4 (Fig. 13(a), Fig. 13(b) und Fig. 13(c)).

In der nachfolgenden Beschreibung der Ausführungsbeispiele der Erfindung werden gleiche Elemente oder gleichwirkende Elemente mit gleichen Bezugszeichen versehen. Elemente, die bereits anhand der Fig. 1 bis 5 beschrieben wurden, werden nicht nochmals im Detail erläutert und diesbezüglich wird auf die obigen Ausführungen verwiesen.

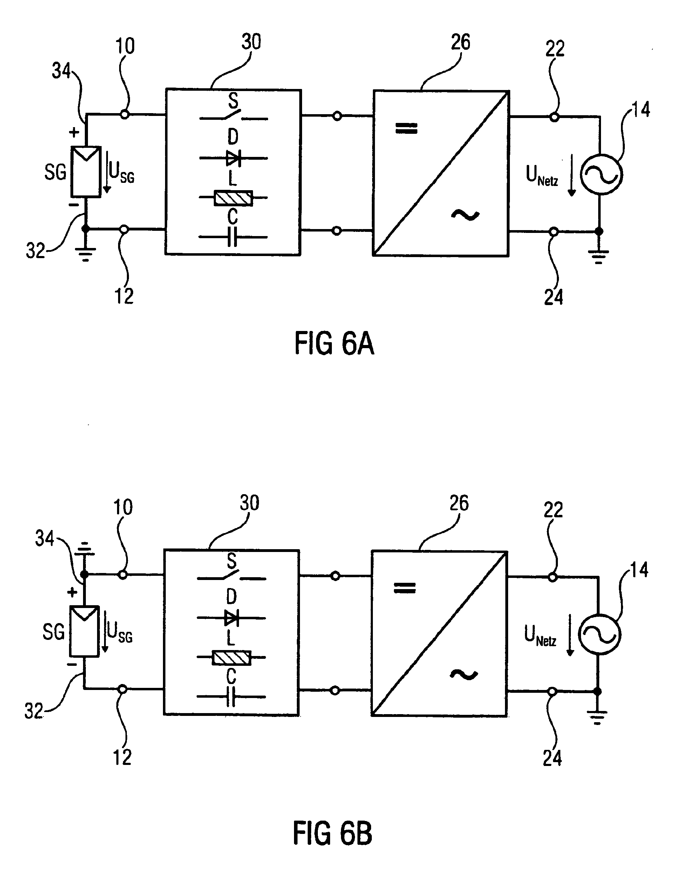

Fig. 6(a) zeigt ein Ausführungsbeispiel der Erfindung, bei dem eine Trenneinrichtung 30 zwischen den Solargenerator SG und den Wechselrichter 26 geschaltet ist. Bei dem in Fig. 6 gezeigten Ausführungsbeispiel ist der Minuspol 32 des Solargenerators SG geerdet. Auch die weiteren Ausführungsbeispiele beschreiben einen Solargenerator SG, dessen Minuspol 32 geerdet ist. Es sei darauf hingewiesen, dass die vorliegende Erfindung natürlich nicht auf eine solche Ausgestaltung beschränkt ist. Vielmehr kann auch der Pluspol 34 des Solargenerators geerdet sein, wie dies in Fig. 6(b) gezeigt ist. Die vorliegende Erfindung ist auch nicht auf eine Verschaltung eines der Pole des Solargenerators SG gegen Erde beschränkt, sondern vielmehr kann der Solargenerator SG auch auf ein beliebiges, voreingestelltes Bezugspotential gelegt sein, beispielsweise durch Bereitstellung einer zusätzlichen Spannungsquelle, um von Null verschiedene Potentiale des Solargenerators gegen Erde einzustellen, wobei die Spannungsquelle entweder Teil des Solargenerators oder eine zusätzliche, externe Spannungsquelle sein kann.

Fig. 6(a) und Fig. 6(b) zeigen schematisch die Trenneinrichtung 30 gemäß Ausführungsbeispielen der Erfindung, die es ermöglicht, den Solargenerator SG von dem Netz 14 zu entkoppeln, wobei die Trenneinrichtung 30 zusätzlich einen oder mehrere Schalter S umfasst, sowie zumindest ein Energiespeicherelement, beispielsweise in Form eines Kondensators C. Optional können ferner Drosselelemente L bzw. Gleichrichterdioden D zusätzlich vorgesehen sein. Die Trenneinrichtung 30 ermöglicht es, den Zwischenkreiskondensator C₁ des Wechselrichters 26 durch den geerdeten Solargenerator SG während der Freilaufphase des Wechselrichters zu laden, da dieser während der Freilaufphase vom Netzpotential getrennt ist. Durch die Schalter S wird während der Phase, in der der Zwischenkondensator mit dem Netz verbunden ist, der Solargenerator SG abgetrennt, wodurch ein Kurzschluss vermieden wird.

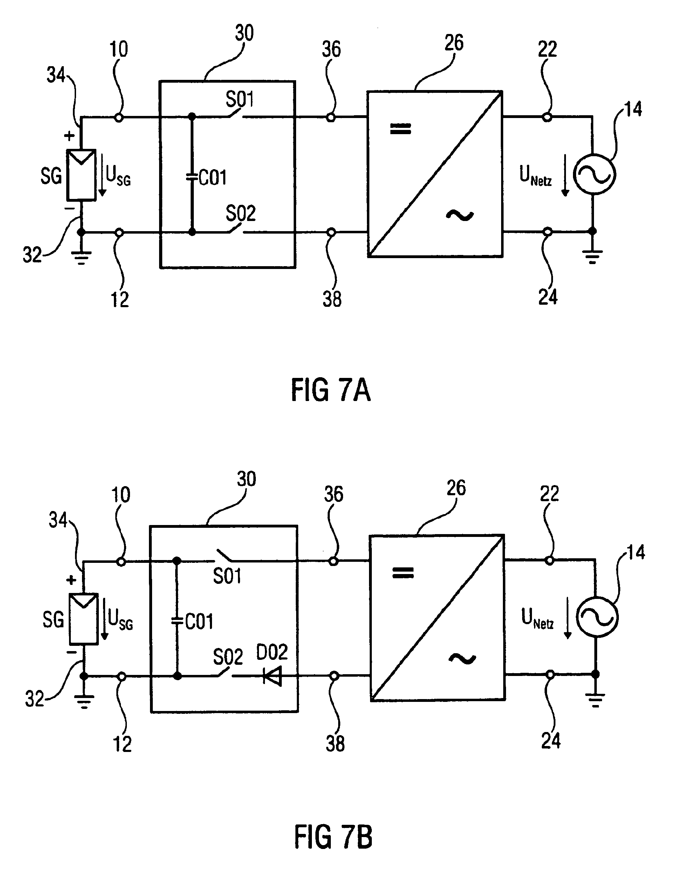

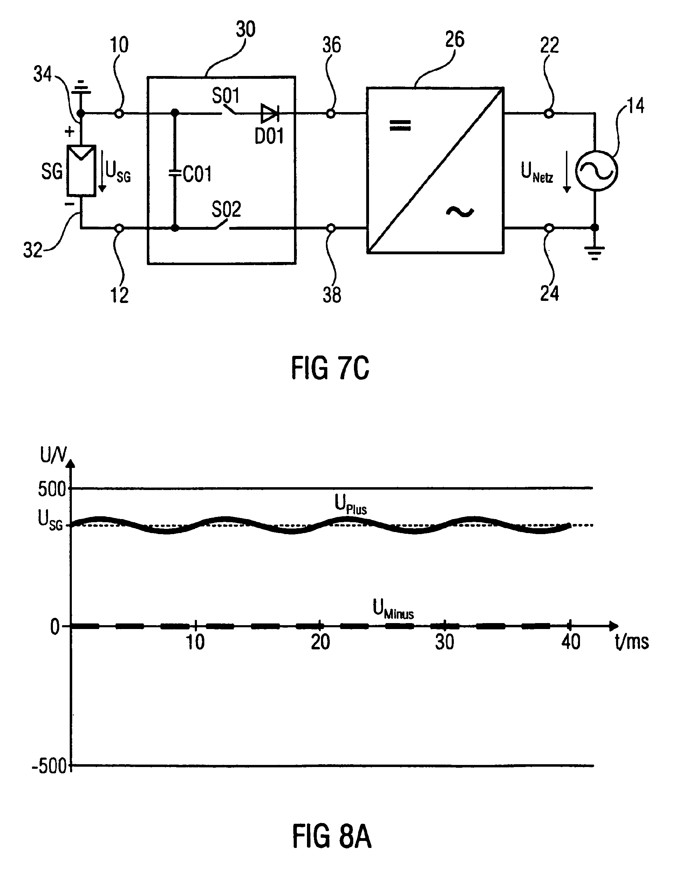

Fig. 7(a) zeigt ein einfaches Beispiel für eine mögliche Ausführung der Trenneinrichtung gemäß Ausführungsbeispielen der Erfindung, wobei die Trenneinrichtung 30 zwischen die Gleichstromanschlüsse 10, 12 des Solargenerators SG und die Eingangsanschlüsse 36 und 38 des Wechselrichters 26 geschaltet ist. In dem in Fig. 7 gezeigten Ausführungsbeispiel umfasst die Trenneinrichtung 30 die zwei Schalter S₀₁ und S₀₂, die beispielsweise als elektronische Schalter bzw. Transistoren ausgestaltet sein können, so wie den Kondensator C₀₁ als Energiespeicher. Der Energiespeicher C₀₁ ist parallel zu den Anschlüssen 10, 12, also dem Eingang der Trenneinrichtung 30 geschaltet, und der Schalter S₀₁ ist in Serie zwischen einen ersten Eingangsanschluss 10 und einen ersten Ausgangsanschluss 36 der Trennschaltung 30 geschahtet. Der Schalter S₀₂ ist zwischen einen zweiten Anschluss 12 des Eingangs der Trennschaltung 30 und einen zweiten Anschluss 38 des Ausgangs der Trennschaltung 30 geschaltet. Die Schalter S₀₁ und S₀₂ sind während der Freilaufphase im Wechselrichter 26 angesteuert, so dass der Energiespeicherkondensator C₁ des Wechselrichters 26, der während dieser Freilaufphase vom Netz 14 getrennt ist, durch die im Energiespeicher C₀₁ der Trenneinrichtung 30 zwischengespeicherte Energie aufgeladen werden kann. Außerhalb der Freilaufphase des Wechselrichters 26, also während der Zeit, in der der Kondensator C₁ des Wechselrichters 26 mit dem Netz verbunden ist, sind die Schalter S₀₁ und S₀₂ geöffnet, um den Kurzschluss zwischen dem geerdeten Solargenerator SG und dem geerdeten Netz zu vermeiden. Gleichzeitig wird durch das Energiespeicherelement C₀₁ ermöglicht, dass auch außerhalb der Freilaufphase des Wechselrichters 26 die vom Solargenerator SG bereitgestellte Energie für eine spätere Abgabe an den Wechselrichter zwischengespeichert wird, und zwar durch das Energiespeicherelement C₀₁ der Trenneinrichtung 30.

Fig. 7(b) und 7(c) zeigen Modifikationen des Ausführungsbeispiels aus Fig. 7 (a), bei dem die Schalter S₀₁ und/oder S₀₂ durch Transistoren realisiert sind. Solche Transistoren können ggf. Inversdioden aufweisen, die während einer Trennung des Kondensators C₀₁ von dem Netz 14 dennoch einen Rückstrom in den Kondensator C₀₁ zulassen. Um in einer solchen Ausgestaltung den unerwünschten Rückstrom aufgrund der Inversdioden der Transistoren in den Kondensator C₀₁ zu vermeiden, sind zusätzlich die Dioden D₀₁ bzw. D₀₂ vorgesehen. In der Schaltung gemäß Fig. 7(b), die einen Solargenerator SG aufweist, dessen Minuspol geerdet ist, ist die Diode D₀₂ zwischen den Schalter (Transistor) S₀₂ und den Knoten 38 geschaltet. In der Schaltung gemäß Fig. 7(c), die einen Solargenerator SG aufweist, dessen Pluspol geerdet ist, ist die Diode D₀₁ zwischen den Schalter (Transistor) S₀₁ und den Knoten 36 geschaltet. Alternativ kann die Diode D₀₁ bzw. D₀₂ auch vor dem Schalter S₀₁ bzw. S₀₂, also zwischen dem Kondensator C₀₁ und dem Schalter S₀₁ bzw. S₀₂, angeordnet sein.

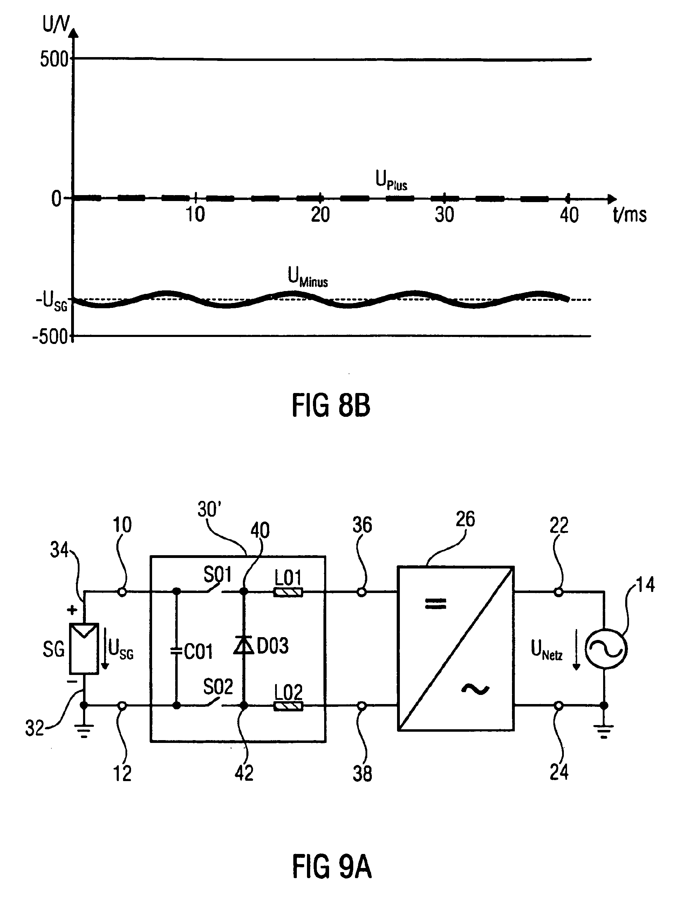

Fig. 8 zeigt die DC-Spannungsverläufe des Solargenerators SG gegen Erde bei Verwendung der Trenneinrichtung, wie sie beispielsweise anhand der Fig. 7 beschrieben sind. Fig. 8(a) zeigt die DC-Spannungsverläufe für einen Solargenerator, dessen Minuspol geerdet ist, und Fig. 8(b) zeigt die DC-Spannungsverläufe für einen Solargenerator zeigt, dessen Pluspol ist. Fig. 8 zeigt die Potentiale des Solargenerators wiederum gegen Erde, und ein Vergleich mit Fig. 5 zeigt, dass durch die Verwendung der Trenneinrichtung gemäß Ausführungsbeispielen der Erfindung der sinusförmige Anteil von U_{Plus} (Fig. 8 (a)) bzw. von U_{Minus} (Fig. 8(b)), wie er herkömmlicherweise auftreten würde (siehe Fig. 5) im Wesentlichen eliminiert wurde. Ferner liegt das Potential des Minuspols (Fig. 8(a)) bzw. des Pluspols (Fig. 8(b)) auf Null, da dieser ja geerdet ist.

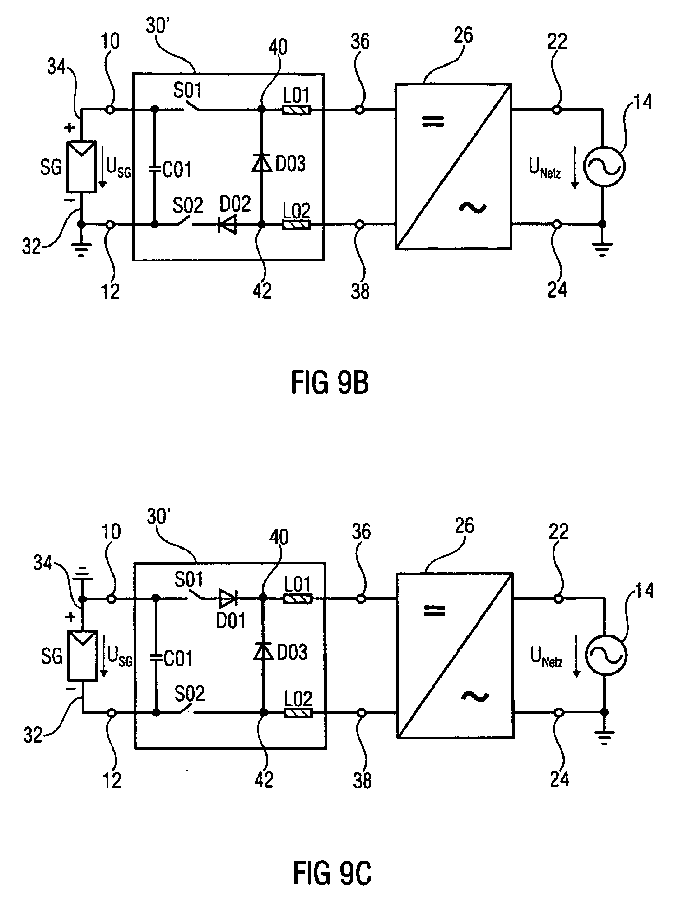

Fig. 9(a) zeigt eine Trennschaltung gemäß einem weiteren Ausführungsbeispiel der Erfindung, wiederum mit einem Kondensator C₀₁ als Pufferspeicher und den zwei elektronischen Schaltern S₀₁ und S₀₂, die bereits anhand der Fig. 7 beschrieben wurde. Zusätzlich umfasst die Trennschaltung 30' gemäß Fig. 9 die zwei Drosselspulen L₀₁ und L₀₂ sowie die Freilaufdiode D₀₃. Die Drosselspule L₀₁ ist seriell zwischen den Schalter S₀₁ und den ersten Anschluss 36 des Ausgangs der Trennschaltung 30' geschaltet, und die zweite Drosselspule S₀₂ ist seriell zwischen den Schalter S₀₂ und den zweiten Anschluss 38 des Ausgangs der Trenneinrichtung 30' geschaltet. Die Freilaufdiode D₀₃ist zwischen den Knoten 40 zwischen dem Schalter S₀₁ und der Drosselspule L₀₁ und den Knoten 42 zwischen dem Schalter S₀₂ und der Drosselspule L₀₂ geschaltet.

Fig. 9(b) und 9(c) zeigen, ähnlich wie Fig. 7(b) und 7(c), Modifikationen des Ausführungsbeispiels aus Fig. 9(a), bei dem die Schalter S₀₁ und/oder S₀₂ durch Transistoren realisiert sind. Solche Transistoren können ggf. Inversdioden aufweisen, die während einer Trennung des Kondensators C₀₁ von dem Netz 14 trotzdem einen Rückstrom in den Kondensator C₀₁ zulassen. Um in einer solchen Ausgestaltung den unerwünschten Rückstrom aufgrund der Inversdioden der Transistoren in den Kondensator C₀₁ zu vermeiden, sind zusätzlich die Dioden D₀₁ bzw. D₀₂ vorgesehen. In der Schaltung gemäß Fig. 9(b), die einen Solargenerator SG aufweist, dessen Minuspol geerdet ist, ist die Diode D₀₂ zwischen den Schalter (Transistor) S₀₂ und den Knoten 42 geschaltet. In der Schaltung gemäß Fig. 9(c), die einen Solargenerator SG aufweist, dessen Pluspol geerdet ist, ist die Diode D₀₁ zwischen den Schalter (Transistor) S₀₁ und den Knoten 40 geschaltet. Alternativ kann die Diode D₀₁ bzw. D₀₂ auch vor dem Schalter S₀₁ bzw. S₀₂, also zwischen dem Kondensator C₀₁ und dem Schalter S₀₁ bzw. S₀₂, angeordnet sein. Bei eine wiederum alternativen Ausgestaltung kann die Diode D₀₁ bzw. D₀₂ auch nach der Drosselspule L₀₁ bzw. L₀₂, also zwischen der Drosselspule L₀₁ bzw. L₀₂ und dem Knoten 36 bzw. 38 angeordnet sein.

Wie bei den anhand der Fig. 7 beschriebenen Ausführungsbeispielen werden auch bei den anhand der Fig. 9 beschriebenen Ausführungsbeispielen die Transistoren S₀₁ und S₀₂ nur während der Freilaufphase des Wechselrichters 26 angesteuert, und durch eine Pulsweitenmodulation kann der Strom in den Drosselspulen L₀₁ und L₀₂ geregelt werden. Gegenüber den anhand der Fig. 7 beschriebenen Ausgestaltungen sind die Schaltungen gemäß Fig. 9 vorteilhaft, da hier die Eingangsspannung an dem Kondensator C₀₁ unabhängig von der Spannung des Kondensators C₁ im Wechselrichter 26 geregelt werden kann.

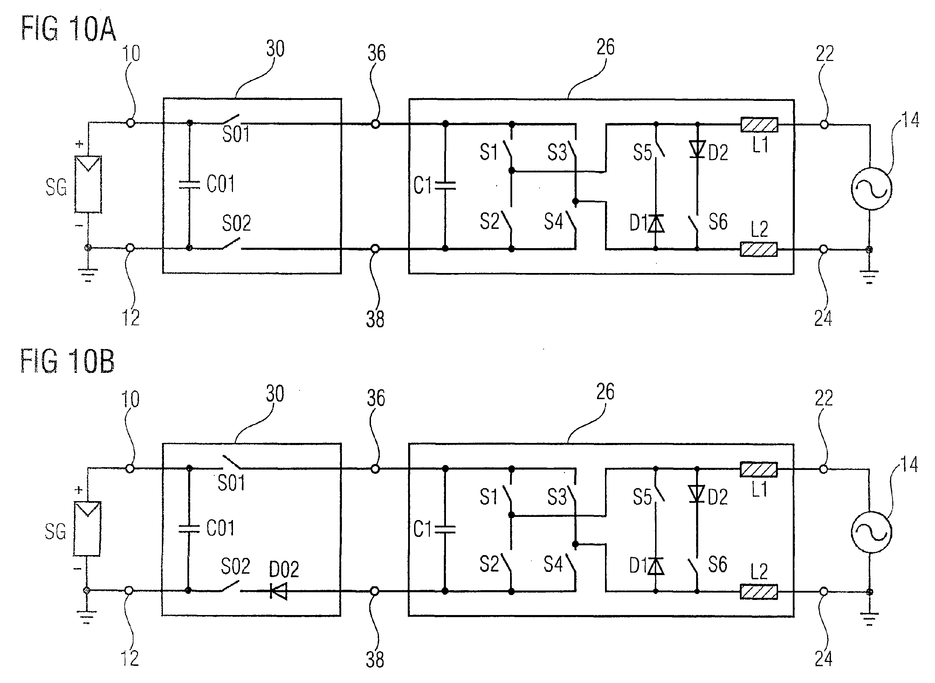

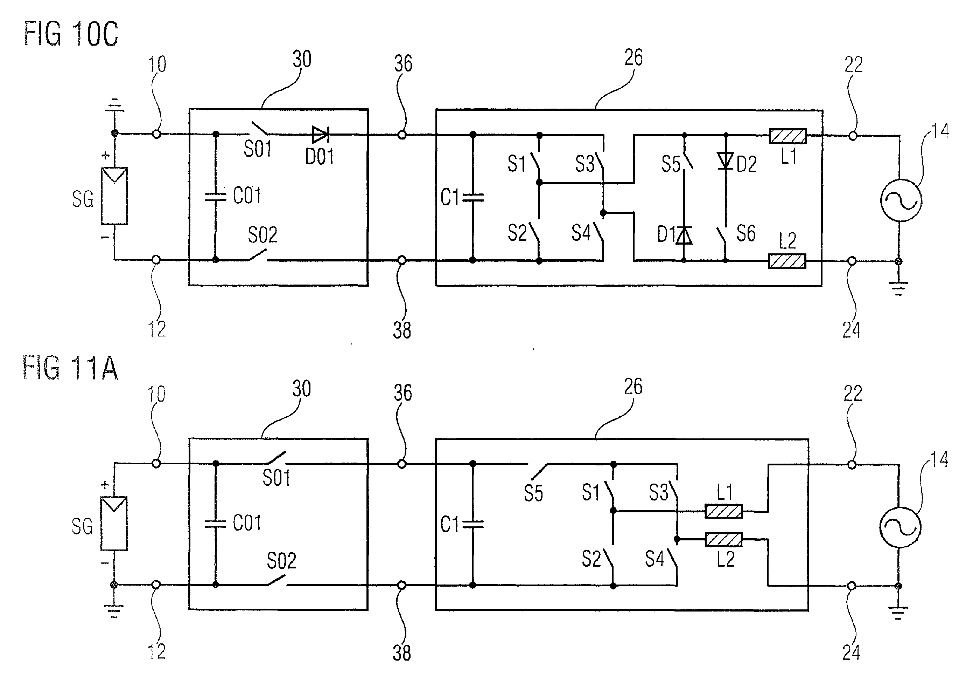

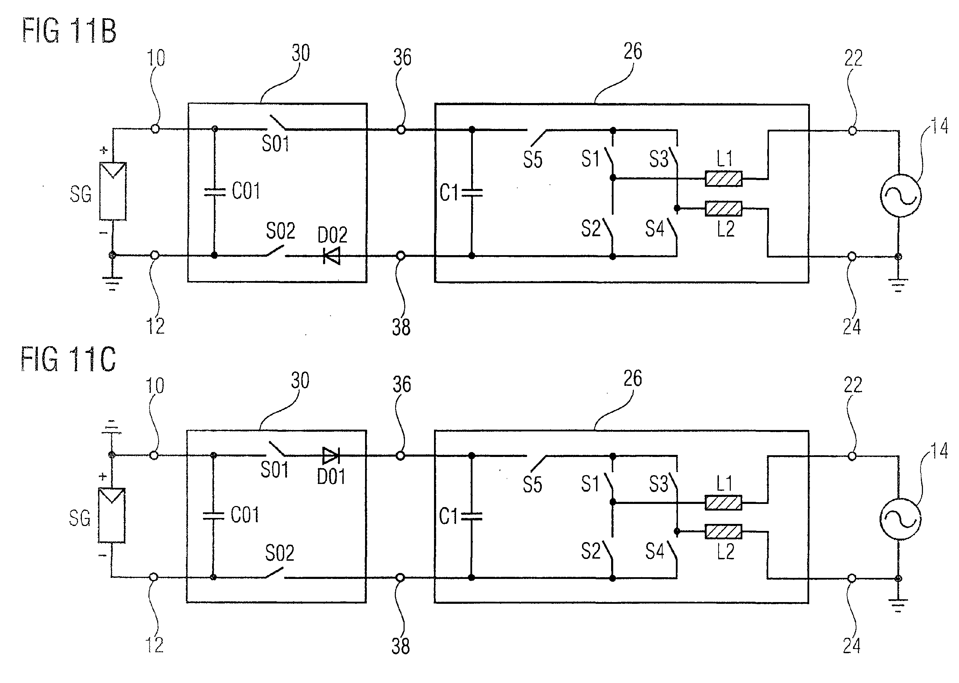

Anhand der Fig. 10 werden Beispiele beschrieben, gemäß denen die Trenneinrichtung gemäß Fig. 7(a), Fig. 7(b) bzw. 7(c) mit der Schaltung gemäß Fig. 3 (siehe Fig. 10(a), Fig. 10 (b) bzw. Fig. 10(c)) kombiniert werden. Anhand der Fig. 11 werden Beispiele beschrieben, gemäß denen die Trenneinrichtung gemäß Fig. 7(a), Fig. 7(b) bzw. 7(c) mit der Schaltung gemäß Fig. 4 (siehe Fig. 11(a), Fig. 11(b) bzw. Fig. 11(c)) kombiniert werden.

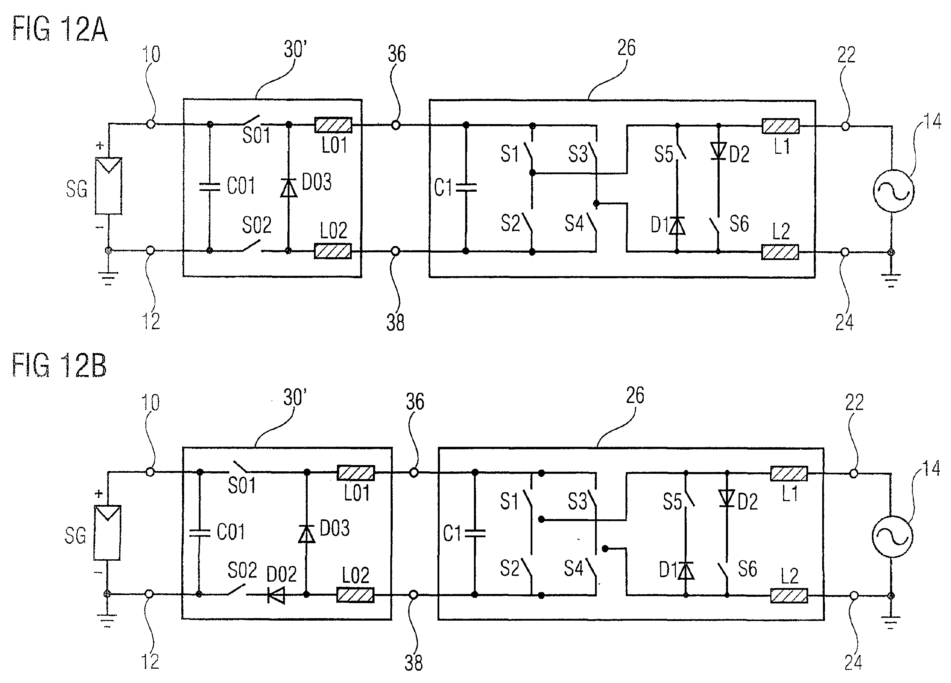

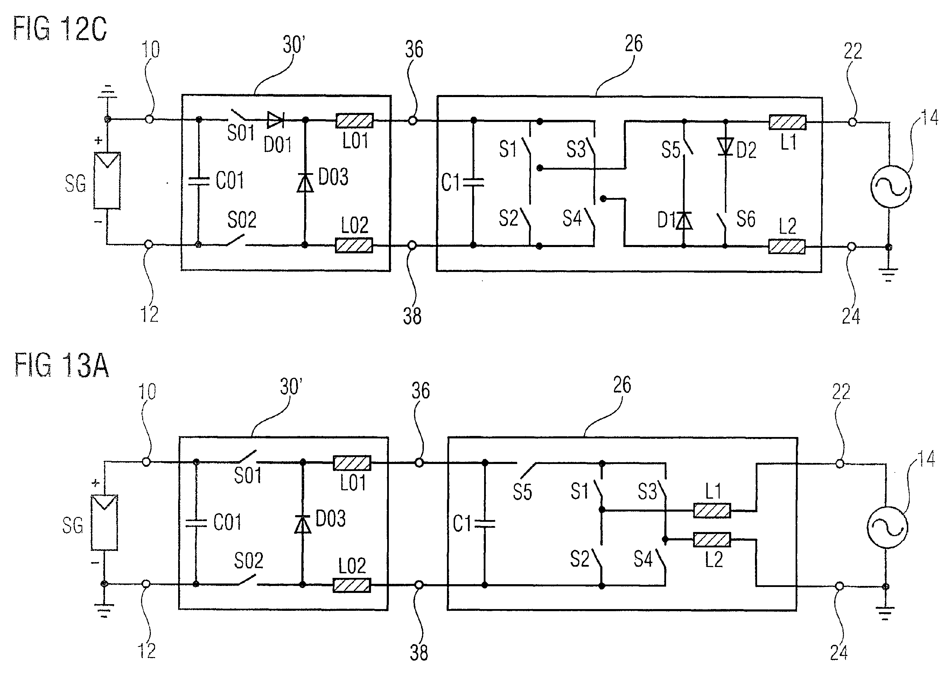

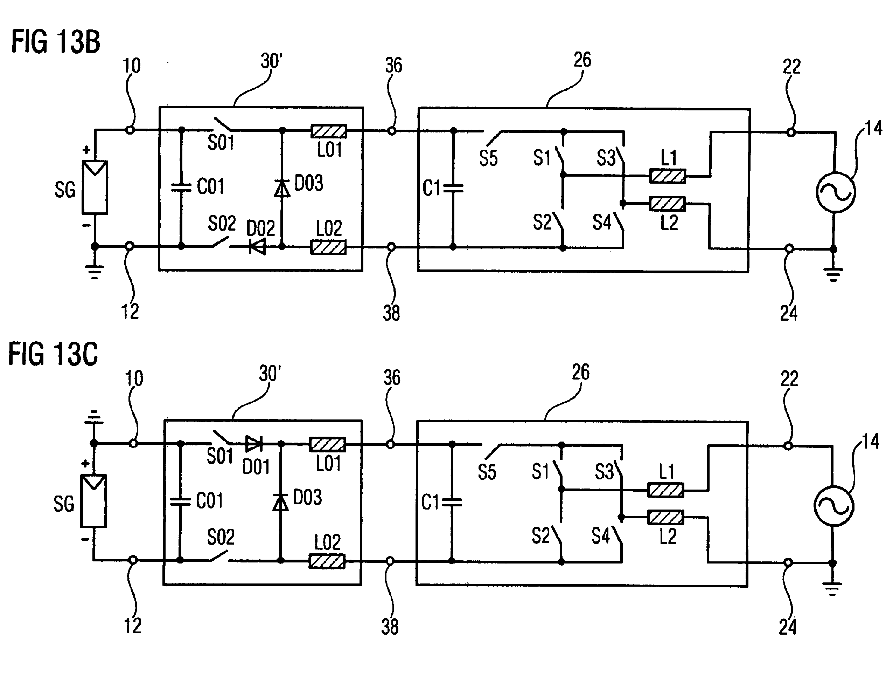

Anhand der Fig. 12 werden Beispiele beschrieben, gemäß denen die Trenneinrichtung gemäß Fig. 9(a), Fig. 9(b) bzw. 9(c) mit der Schaltung gemäß Fig. 3 (siehe Fig. 12(a), Fig. 12(b) bzw. Fig. 12(c)) kombiniert werden. Anhand der Fig. 13 werden Beispiele beschrieben, gemäß denen die Trenneinrichtung gemäß Fig. 9(a), Fig. 9(b) bzw. 9(c) mit der Schaltung gemäß Fig. 4 (siehe Fig. 13(a), Fig. 13(b) bzw. Fig. 13(c)) kombiniert werden.

Fig. 10 und 12 zeigen die Kopplung der Trenneinrichtungen gemäß Fig. 7 bzw. Fig. 9 mit der Wechselrichterschaltung gemäß Fig. 3. Während der Freilaufphase im Wechselrichter, d.h. wenn der Strom durch den Schalter S5 oder S6 fließt, sind die vier Brückentransistoren S1 bis S4 ausgeschaltet und es besteht keine leitende Verbindung zwischen dem Kondensator C₁ und dem Netz 14. Während dieser Zeit kann der Kondensator C₁ über die Schalter S₀₁ und S₀₂ nachgeladen werden. Sein Potential gegen Erde springt dabei vom floatenden Netzpotential auf das feste Solargeneratorpotential.

Fig. 11 und 12 zeigen die Kombination der Trenneinrichtungen gemäß Fig. 7 bzw. Fig. 9 mit dem Wechselrichter gemäß Fig. 4. Der Freilauf des Wechselrichters erfolgt über die Transistoren S1 und S3. Während dieser Phase sind die Transistoren S2, S4 und S5 ausgeschaltet und der Kondensator C₁ ist potentialfrei. Durch Zuschalten der Transistoren S₀₁ und S₀₂ der Trenneinrichtung kann der Kondensator C₁ in dieser Phase nachgeladen werden. Dabei springt das Potential auf das des Solargenerators.

Anhand der Fig. 9, 12 und 13 wurden Ausführungsbeispiele beschrieben, bei denen zwei Drosselspulen vorgesehen sind. Die vorliegende Erfindung ist nicht auf diese in der Praxis aus Symmetriegründen bevorzugte Ausführungsform beschränkt. Alternativ kann bei diesen Ausführungsbeispielen auch nur eine Drosselspule vorgesehen sein.

## Patentansprüche

1. Trennschaltung für einen Wechselrichter (26), wobei der Wechselrichter (26) einen Energiespeicher (C₁) aufweist, der während einer Freilaufphase von einem Netz (14) getrennt ist, wobei die Trennschaltung folgende Merkmale umfasst:
einen Eingang (10, 12);
einen Ausgang (36, 38), der mit dem Wechselrichter (26) verbindbar ist;
ein Energiespeicherelement (C₀₁), das mit dem Eingang (10, 12) verbunden ist und wirksam ist, um von dem Eingang (10, 12) empfangene Energie zu speichern; und
ein Schaltelement (S₀₁, S₀₂), das zwischen das Energiespeicherelement (C₀₁) und den Ausgang (36, 38) geschaltet ist, wobei das Schaltelement (S₀₁, S₀₂) wirksam ist, um während der Freilaufphase des Wechselrichters (26) das Energiespeicherelement (C₀₁) mit dem Ausgang (36, 38) zu verbinden, und um außerhalb der Freilaufphase des Wechselrichters (26) das Energiespeicherelement (C₀₁) von dem Ausgang (36, 38) zu trennen.

2. Trennschaltung nach Anspruch 1, bei der
der Eingang einen ersten Anschluss (10) und einen zweiten Anschluss (12) aufweist, und
der Ausgang einen ersten Anschluss (36) und einen zweiten Anschluss (38) aufweist,
wobei das Energiespeicherelement (C₀₁) zwischen den ersten Anschluss (10) und den zweiten Anschluss (12) des Eingangs geschaltet ist, und
wobei das Schaltelement einen ersten Schalter (S₀₁), der zwischen den ersten Anschluss (10) des Eingangs und den ersten Anschluss (36) des Ausgangs geschaltet ist, und einen zweiten Schalter (S₀₂), der zwischen den zweiten Anschluss (12) des Eingangs und den zweiten Anschluss (38) des Ausgangs geschaltet ist, umfasst.

3. Trennschaltung nach Anspruch 2, mit
einer ersten Drosselspule (L₀₁), die zwischen den ersten Schalter (S₀₁) und den ersten Anschluss (36) des Ausgangs geschaltet ist;
einer zweiten Drosselspule (L₀₂), die zwischen den zweiten Schalter (S₀₂) und den zweiten Anschluss (38) des Ausgangs geschaltet ist; und
einer Freilaufdiode (D₀₃), die zwischen einen Knoten (40) zwischen dem ersten Schalter (S₀₁) und der Drosselspule (L₀₁) und einen Knoten (42) zwischen dem Schalter (S₀₂) und der Drosselspule (L₀₂) geschaltet ist.

4. Trennschaltung nach Anspruch 2 oder 3, bei der das Energiespeicherelement (C₀₁) einen Kondensator umfasst.

5. Trennschaltung nach einem der Ansprüche 2 bis 4, bei der die Schalter (S₀₁, S₀₂) elektronische Schalter oder Transistoren umfassen.

6. System, mit
einem Solargenerator (SG), der mit einem Bezugspotential, z.B. Erde, verbunden ist;
einem Wechselrichter (26), der ausgebildet ist, um eine von dem Solargenerator (SG) bereitgestellte Gleichspannung (U_{SG}) in eine Wechselspannung (U_{NETZ}) umzuwandeln und an einen Ausgang (22, 24) des Wechselrichters (26) bereitzustellen, wobei der Wechselrichter (26) ferner ausgebildet ist, um während einer Freilaufphase einen Energiespeicher (C₁) des Wechselrichters (26) von dem Ausgang (22, 24) des Wechselrichters zu trennen; und
einer Trennschaltung (30; 30') nach einem der Ansprüche 1 bis 5.

7. System nach Anspruch 6, mit einer Leistungsquelle, die ausgebildet ist, um das Bezugspotential bereitzustellen.

8. System nach Anspruch 7, bei dem der Solargenerator (SG) die Leistungsquelle umfasst.

9. System nach einem der Ansprüche 6 bis 8, bei dem der Solargenerator (SG) Dünnschichtmodule oder rückseitenkontaktierte Solarzellen umfasst.

10. Wechselrichterschaltung zum Umwandeln einer empfangenen Gleichspannung (U_{SG}) in eine Wechselspannung (U_{NETZ}), mit
einem Eingang (10, 12);
einem Ausgang (22, 24);
einem Energiespeicher (C₁);
einem Schaltnetzwerk, das zwischen den Energiespeicher (C₁) und den Ausgang (22, 24) geschaltet ist und wirksam ist, um während einer Freilaufphase den Energiespeicher (C₁) von dem Ausgang (22, 24) zu trennen, und um außerhalb der Freilaufphase den Energiespeicher (C₁) mit dem Ausgang (22, 24) zu verbinden; und
einer Trennschaltung (30; 30') nach einem der Ansprüche 1 bis 6, die zwischen den Eingang (10, 12) und den Energiespeicher (C₁) geschaltet ist.

11. Wechselrichterschaltung nach Anspruch 10, bei der das Schaltnetzwerk eine Brückenschaltung (16) mit vier Schaltern (S₁-S₄), eine erste Drosselspule (L₁), die zwischen einen ersten Brückenabgriff (18) und einen ersten Anschluss (22) des Ausgangs geschaltet ist, eine zweite Drosselspule (L₂), die zwischen einen zweiten Brückenabgriff (20) und einen zweiten Anschluss (24) des Ausgangs geschaltet ist, und eine Parallelschaltung zwischen dem ersten und zweitem Brückenabgriff (18, 20), die eine erste Serienschaltung aus einem ersten Schalter (S5) und einer ersten Gleichrichterdiode (D₁) und eine zweite Serienschaltung aus einem zweiten Schalter (S6) und einer zur ersten Diode (D₁) entgegengesetzt verschalteten zweiten Diode (D₂) aufweist, umfasst,
wobei während der Freilaufphase die Schalter (S₁-S₄) der Brücke (16) offen sind.

12. Wechselrichterschaltung nach Anspruch 10, bei der das Schaltnetzwerk eine Brückenschaltung (16) mit vier Schaltern (S₁-S₄), eine erste Drosselspule (L₁), die zwischen einen ersten Brückenabgriff (18) und einen ersten Anschluss (22) des Ausgangs geschaltet ist, eine zweite Drosselspule (L₂), die zwischen einen zweiten Brückenabgriff (20) und einen zweiten Anschluss (24) des Ausgangs geschaltet ist, und einen Schalter (S5) zwischen dem Energiespeicher (C₁) und der Brücke (16) umfasst,
wobei während der Freilaufphase der Schalter (S5) und zumindest zwei der Brückenschalter (S2, S4) offen sind.

13. Verfahren zum Umwandeln einer durch einen Solargenerator (SG), der mit einem Bezugspotential verbunden ist, bereitgestellten Gleichspannung (U_{SG}) in eine Wechselspannung (U_{NETZ}), mit folgenden Schritten:
außerhalb einer Freilaufphase eines Wechselrichters (26), wenn ein mit dem Eingang des Wechselrichters (26) verbundener Energiespeicher (C₁) mit einem Ausgang (22, 24) des Wechselrichters (26) verbunden ist, Trennen des Solargenerators (SG) von dem Wechselrichter (26) und Zwischenspeichern der von dem Solargenerator (SG) bereitgestellten Energie; und
während der Freilaufphase des Wechselrichters (26), während der der Energiespeicher (C₁) des Wechselrichters (26) von dem Ausgang (22, 24) des Wechselrichters (26) getrennt ist, Aufladen des Energiespeichers (C₁) des Wechselrichters (26).

14. Verfahren nach Anspruch 13, mit folgendem Schritt:
Bereitstellen einer internen oder externen Leistungsquelle für den Solargenerator (SG), die das Bezugspotential bereitstellt.

15. Verfahren nach Anspruch 13, mit folgendem Schritt:
Erden des Solargenerators (SG).

## Claims

1. Isolating circuit for a DC/AC converter (26), wherein the DC/AC converter (26) comprises an energy storage (C₁) isolated from mains (14) during a freewheeling phase, the isolating circuit comprising:
an input (10, 12);
an output (36, 38) configured to be connected to the DC/AC converter (26);
an energy storage element (C₀₁) connected to the input (10, 12) and operative to store energy received from the input (10, 12); and
a switching element (S₀₁, S₀₂) connected between the energy storage element (C₀₁) and the output (36, 38), wherein the switching element (S₀₁, S₀₂) is operative to connect the energy storage element (C₀₁) to the output (36, 38) during the freewheeling phase of the DC/AC converter (26), and to isolate the energy storage element (C₀₁) from the output (36, 38) outside the freewheeling phase of the DC/AC converter (26).

2. Isolating circuit according to claim 1, wherein
the input comprises a first terminal (10) and a second terminal (12), and
the output comprises a first terminal (36) and a second terminal (38),
wherein the energy storage element (C₀₁) is connected between the first terminal (10) and the second terminal (12) of the input, and
wherein the switching element comprises a first switch (S₀₁) connected between the first terminal (10) of the input and the first terminal (36) of the output, and a second switch (S₀₂) connected between the second terminal (12) of the input and the second terminal (38) of the output.

3. Isolating circuit according to claim 2, comprising
a first choke coil (L₀₁) connected between the first switch (S₀₁) and the first terminal (36) of the output;
a second choke coil (L₀₂) connected between the second switch (S₀₂) and the second terminal (38) of the output; and
a freewheeling diode (D₀₃) connected between a node (40) between the first switch (S₀₁) and the choke coil (L₀₁) and a node (42) between the switch (S₀₂) and the choke coil (L₀₂).

4. Isolating circuit according to claims 2 or 3, wherein the energy storage element (C₀₁) comprises a capacitor.

5. Isolating circuit according to one of claims 2 to 4, wherein the switches (S₀₁, S₀₂) comprise electronic switches or transistors.

6. System comprising
a solar generator (SG) connected to a reference potential, e.g. ground;
a DC/AC converter (26) implemented to convert a DC voltage (U_{SG}) provided by the solar generator (SG) into an AC voltage (Uₘₐᵢₙₛ) and to provide it to an output (22, 24) of the DC/AC converter (26), wherein the DC/AC converter (26) is further implemented to isolate an energy storage (C₁) of the DC/AC converter (26) from the output (22, 24) of the DC/AC converter during a freewheeling phase; and
an isolating circuit (30; 30') according to one of claims 1 to 5.

7. System according to claim 6 having a power source implemented to provide the reference potential.

8. System according to claim 7, wherein the solar generator (SG) comprises the power source.

9. System according to one of claims 6 to 8, wherein the solar generator (SG) comprises thin-film modules or rear-side contacted solar cells.

10. DC/AC converter circuit for converting a received DC voltage (U_{SG}) into an AC voltage (Umains), comprising
an input (10, 12);
an output (22, 24);
an energy storage (C₁);
a switching network connected between the energy storage (C₁) and the output (22, 24) and operative to isolate the energy storage (C₁) from the output (22, 24) during a freewheeling phase and to connect the energy storage (C₁) to the output (22, 24) outside the freewheeling phase; and
an isolating circuit (30; 30') according to one of claims 1 to 6, connected between the input (10, 12) and the energy storage (C₁).

11. DC/AC converter circuit according to claim 10, wherein the switching network comprises a bridge circuit (16) with four switches (S₁-S₄), a first choke coil (L₁) connected between a first bridge tap (18) and a first terminal (22) of the output, a second choke coil (L₂) connected between a second bridge tap (20) and a second terminal (24) of the output, and a parallel circuit between the first and second bridge taps (18, 20) comprising a first series connection of a first switch (S5) and a first rectifier diode (D₁) and a second series connection of a second switch (S6) and a second diode (D₂) connected opposed to the first diode (D₁),
wherein the switches (S₁-S₄) of the bridge (16) are open during the freewheeling phase.

12. DC/AC converter circuit according to claim 10, wherein the switching network comprises a bridge circuit (16) with four switches (S₁-S₄), a first choke coil (L₁) connected between a first bridge tap (18) and a first terminal (22) of the output, a second choke coil (L₂) connected between a second bridge tap (20) and a second terminal (24) of the output, and a switch (S5) between the energy storage (C₁) and the bridge (16),
wherein the switch (S5) and at least two of the bridge switches (S2, S4) are open during the freewheeling phase.

13. Method for converting a DC voltage (U_{SG}) provided by a solar generator (SG) connected to a reference potential into an AC voltage (Uₘₐᵢₙₛ), comprising:
outside a freewheeling phase of a DC/AC converter (26), when an energy storage (C₁) connected to the input of the DC/AC converter (26) is connected to an output (22, 24) of the DC/AC converter (26), isolating the solar generator (SG) from the DC/AC converter (26) and temporarily storing the energy provided by the solar generator (SG); and
during the freewheeling phase of the DC/AC converter (26), during which the energy storage (C₁) of the DC/AC converter (26) is isolated from the output (22, 24) of the DC/AC converter (26), charging the energy storage (C₁) of the DC/AC converter (26).

14. Method according to claim 13, comprising:
providing an internal or external power source for the solar generator (SG), which provides the reference potential.

15. Method according to claim 13, comprising:
grounding the solar generator (SG).

## Revendications

1. Dispositif sectionneur pour un onduleur (26), dans lequel l'onduleur (26) comporte un accumulateur d'énergie (C₁) qui, pendant une phase de roue libre, est déconnecté d'un réseau (14), ledit dispositif sectionneur comportant:
une entrée (10, 12);
une sortie (36, 38) qui peut être reliée à l'onduleur (26);
un élément d'accumulation d'énergie (C₀₁) qui est relié à l'entrée (10, 12) et qui est opérationnel pour accumuler l'énergie reçue de l'entrée (10, 12); et
un élément de commutation (S₀₁, S₀₂) qui est connecté entre l'élément d'accumulation d'énergie (C₀₁) et la sortie (36, 38), l'élément de commutation (S₀₁, S₀₂) étant opérationnel pour relier, pendant la phase de roue libre de l'onduleur (26), l'élément d'accumulation d'énergie (C₀₁) à la sortie (36, 38) et pour déconnecter, en-dehors de la phase de roue libre de l'onduleur (26), l'élément d'accumulation d'énergie (C₀₁) de la sortie (36 38).

2. Dispositif sectionneur selon la revendication 1, dans lequel
l'entrée présente une première connexion (10) et une deuxième connexion (12), et
la sortie présente une première connexion (36) et une deuxième connexion (38),
l'élément d'accumulation d'énergie (C₀₁) est connecté entre la première connexion (10) et la deuxième connexion (12) de l'entrée, et
l'élément de commutation comprend un premier interrupteur (S₀₁) qui est connecté entre la première connexion (10) de l'entrée et la première connexion (36) de la sortie, et un deuxième interrupteur (S₀₂) qui est connecté entre la deuxième connexion (12) de l'entrée et la deuxième connexion (38) de la sortie.

3. Dispositif sectionneur selon la revendication 2, avec
une première bobine d'arrêt (L₀₁) qui est connectée entre le premier interrupteur (S₀₁) et la première connexion (36) de la sortie;
une deuxième bobine d'arrêt (L₀₂) qui est connectée entre le deuxième interrupteur (S₀₂) et la deuxième connexion (38) de la sortie; et
une diode à roue libre (D₀₃) qui est connectée entre un noeud (40) entre le premier interrupteur (S₀₁) et la bobine d'arrêt (L₀₂) et un noeud (42) entre l'interrupteur (S₀₂) et la bobine d'arrêt (L₀₂).

4. Dispositif sectionneur selon la revendication 2 ou 3, dans lequel l'élément d'accumulation d'énergie (C₀₁) comprend un condensateur.

5. Dispositif sectionneur selon l'une des revendications 2 à 4, dans lequel les interrupteurs (S₀₁, S₀₂) comportent des interrupteurs ou des transistors électroniques.

6. Système, avec
un générateur solaire (SG) qui est relié à un potentiel de référence, par exemple terre;
un onduleur (26) qui est conçu pour convertir une tension continue (U_{SG}) mise à disposition par le générateur solaire (SG) en une tension alternative (U_{RESEAU}) et pour la mettre à disposition à une sortie (22, 24) de l'onduleur (26), l'onduleur (26) étant par ailleurs conçu pour déconnecter, pendant une phase de roue libre, un accumulateur d'énergie (C₁) de l'onduleur (26) de la sortie (22, 24) de l'onduleur; et
un dispositif sectionneur (30; 30') selon l'une des revendications 1 à 5.

7. Système selon la revendication 6, avec une source d'énergie qui est conçue pour mettre à disposition le potentiel de référence.

8. Système selon la revendication 7, dans lequel le générateur solaire (SG) comporte la source d'énergie.

9. Système selon l'une des revendications 6 à 8, dans lequel le générateur solaire (SG) comporte des modules à couches minces ou des cellules solaires à contact du côté arrière.

10. Dispositif onduleur pour convertir une tension continue (U_{SG}) reçue en une tension alternative (U_{RESEAU}), avec
une entrée (10, 12);
une sortie (22, 24);
un accumulateur d'énergie (C₁);
un réseau de commutation qui est connecté entre l'accumulateur d'énergie (C₁) et la sortie (22, 24) et qui est opérationnel pour déconnecter, pendant une phase de roue libre, l'accumulateur d'énergie (C₁) de la sortie (22, 24) et pour relier, en-dehors de la phase de roue libre, l'accumulateur d'énergie (C₁) à la sortie (22, 24); et
un dispositif sectionneur (30; 30') selon l'une des revendications 1 à 6, qui est connecté entre l'entrée (10, 12) et l'accumulateur d'énergie (C₁).

11. Dispositif onduleur selon la revendication 10, dans lequel le réseau de commutation comporte un circuit en pont (16) avec quatre interrupteurs (S₁ à S₄), une première bobine d'arrêt (L₁) qui est connectée entre une première dérivation de pont (18) et une première connexion (22) de la sortie, une deuxième bobine d'arrêt (L₂) qui est connectée entre une deuxième dérivation de pont (20) et une deuxième connexion (24) de la sortie, et un circuit parallèle entre la première et la deuxième dérivation de pont (18, 20) qui comporte un premier circuit sériel composé d'un premier interrupteur (S5) et d'une première diode de redressement (D₁) et un deuxième circuit sériel composé d'un deuxième interrupteur (S6) et d'une deuxième diode (D₁) connectée opposée à la première diode (D₂),
dans lequel, pendant la phase de roue libre, les interrupteurs (S₁ à S₄) du pont (16) sont ouverts.

12. Dispositif onduleur selon la revendication 10, dans lequel le réseau de commutation comporte un circuit en pont (16) avec quatre interrupteurs (S₁ à S₄), une première bobine d'arrêt (L₁) connectée entre une première dérivation de pont (18) et une première connexion (22) de la sortie, une deuxième bobine d'arrêt (L₂) connectée entre une deuxième dérivation de pont (20) et une deuxième connexion (24) de la sortie et un interrupteur (S5) entre l'accumulateur d'énergie (C₁) et le pont (16),
dans lequel, pendant la phase de roue libre, l'interrupteur (S5) et au moins deux des interrupteurs de pont (S2, S4) sont ouverts.

13. Procédé pour convertir une tension continue (U_{SG}) mise à disposition par le générateur solaire (SG) qui est relié à un potentiel de référence en une tension alternative (U_{RESEAU}), aux étapes suivantes consistant à:
en-dehors d'une phase de roue libre d'un onduleur (26), lorsqu'un accumulateur d'énergie (C₁) relié à l'entrée de l'onduleur (26) est relié à une sortie (22, 24) de l'onduleur (26), déconnecter le générateur solaire (SG) de l'onduleur (26) et accumuler de manière intermédiaire l'énergie mise à disposition par le générateur solaire (SG); et
pendant la phase de roue libre de l'onduleur (26) pendant laquelle l'accumulateur d'énergie (C₁) de l'onduleur (26) est déconnecté de la sortie (22, 24) de l'onduleur (26), charger l'accumulateur d'énergie (C₁) de l'onduleur (26).

14. Procédé selon la revendication 13, avec l'étape suivante consistant à:
mettre à disposition une source d'énergie interne ou externe pour le générateur solaire (SG) qui met à disposition le potentiel de référence.

15. Procédé selon la revendication 13, avec l'étape suivante consistant à:
relier le générateur solaire (SG) à la terre.
